(19) Europäisches Patentamt

European Patent Office

Office européen des brevets

(11) **EP 1 126 747 B1**

(12) **EUROPÄISCHE PATENTSCHRIFT**

(45) Veröffentlichungstag und Bekanntmachung des Hinweises auf die Patenterteilung:
**02.08.2006  Patentblatt 2006/31**

(51) Int Cl.:
***H05B 6/02*** *(2006.01)*

(21) Anmeldenummer: **01101568.2**

(22) Anmeldetag: **25.01.2001**

(54) **Einrichtung zum Aufheizen eines Werkstücks aus Metall**

Heating device for metallic pieces

Dispositif de chauffage d'une pièce en métal

(84) Benannte Vertragsstaaten:
**AT BE CH CY DE DK ES FI FR GB GR IE IT LI LU MC NL PT SE TR**

(30) Priorität: **19.02.2000  DE 10007757**

(43) Veröffentlichungstag der Anmeldung:
**22.08.2001  Patentblatt 2001/34**

(73) Patentinhaber: **ALD Vacuum Technologies AG
63450 Hanau (DE)**

(72) Erfinder:
• **Eberhardt, Helmut
63584 Gründau 3 (DE)**
• **Grosse, Karl-Heinz
63584 Gründau 4 (DE)**

• **Herchenröther, Karl
63633 Birstein (DE)**
• **Lemke, Jürgen
69469 Weinheim (DE)**

(74) Vertreter: **Hebing, Norbert
Patentanwalt,
Frankfurter Strasse 34
61231 Bad Nauheim (DE)**

(56) Entgegenhaltungen:
**EP-A- 0 383 272          EP-A- 0 553 989
WO-A-97/47160          US-A- 1 980 875
US-A- 2 823 289          US-A- 3 596 037
US-A- 3 612 806          US-A- 4 563 558
US-A- 6 023 054**

**Beschreibung**

Die Erfindung betrifft eine Einrichtung nach dem Oberbegriff des Patentanspruchs 1.

Moderne Turbinen werden bei immer höheren Temperaturen betrieben, um ihre Leistung zu steigern. Hohe Temperaturen können jedoch die Superlegierungen beschädigen, aus denen die Turbinenschaufeln bestehen. Die Turbinenschaufeln werden deshalb mit einer Schicht versehen, die besondere Eigenschaften aufweist, z. B. extrem hart ist oder zur Wärmedämmung oder als Korrosionsschutz dient. Damit sich diese Schichten, die beispielsweise mittels EB/PVD (= Electron Beam Physical Vapor Deposition)- oder Sputterverfahren aufgebracht werden, fest mit der Oberfläche der Turbinenschaufeln verbinden, müssen diese Turbinenschaufeln auf eine bestimmte Temperatur aufgeheizt werden.

Das Aufheizen der Turbinenschaufeln auf eine bestimmte Temperatur ist insbesondere deshalb problematisch, weil eine Turbinenschaufel kein symmetrisches oder sonstwie gleichmäßiges Werkstück ist, sondern einen massereichen Schaufelfuß und ein massearmes Schaufelblatt aufweist. Wegen dieser Grundstruktur einer Turbinenschaufel ist eine gleichmäßige Aufheizung aller Turbinenschaufelteile nur schwer erreichbar.

Es ist bereits bekannt, Turbinenschaufeln mittels Strahlungsheizen zu erhitzen, beispielsweise mit Infrarotheizern. Mit einer Strahlungsheizung kann jedoch nur eine begrenzte Flächenleistung erreicht werden, wodurch sich z. B. bei schweren Gasturbinenschaufeln eine relativ lange Aufheizzeit ergibt.

Zur Behebung dieses Nachteils sind Turbinenschaufeln auch schon mit Hilfe von Elektronenstrahlen aufgeheizt worden, die zu einer höheren Flächenleistung führen und bei Wahl geeigneter Bewegungsmuster des Elektronenstrahls auch eine gleichmäßige Aufheizung bewirken.

Nachteilig ist indessen bei der Elektronenstrahl-Aufheizung, dass sie eine aufwendige Elektronenstrahlkanone mit einem ebenfalls aufwendigen Ablenksystem benötigt. Außerdem kann bei der Elektronenstrahl-Aufheizung die Energie, die zum Erwärmen des Werkstücks führt, nur über die Oberfläche des Werkstücks eingebracht werden. Hierdurch dauert es aufgrund der beschränkten Wärmeleitfähigkeit relativ lang, bis die Wärme in die Tiefe des Werkstücks eingedrungen ist.

Die Erwärmung elektrisch gut leitender Stoffe, insbesondere von Metallen, mit Hilfe von magnetischen Wechselfeldern ist seit langem als so genannte induktive Erwärmung bekannt (Meyers Enzyklopädisches Lexikon, Band 12, Hf-Iz, Seite 566). Das Material oder Werkstück wird hierbei in das Innere einer oft flüssigkeitsgekühlten Arbeitsspule gebracht, die von einem Wechselstrom durchflossen wird. Das dadurch entstehende magnetische Wechselfeld ruft im Werkstück Wirbelströme hervor, deren Joulesche Wärme das Material erhitzt.

Um die Oberfläche eines zu behandelnden Körpers vorzuheizen und um eine gleichmäßige Karburierung zu erhalten, ist es auch bekannt, ein Wechselmagnetfeld einem rotierenden Magnetfeld zu überlagern und hierdurch eine Induktionserwärmung zu erzeugen (JP 0062297453 AA).

Weiterhin ist es bekannt, mittels Induktionsheizung die Temperatur innerhalb von 20 Sekunden auf 3300 °C zu bringen (US-A-5 993 058). Bei dieser Induktionsheizung kommt ein Suszeptor zum Einsatz, der in ein variables Magnetfeld gebracht wird, das eine elektromotorische Kraft ausübt. Die induzierten Ströme (oder Wirbelströme), die durch den Suszeptor fließen, werden in Wärme umgewandelt. Eine zu erwärmende Probe wird dann durch die Strahlung des Suszeptors erwärmt.

Schließlich sind auch noch eine Vorrichtung und ein Verfahren zur Metallbedampfung von metallischen Gegenständen bekannt, bei denen der Gegenstand durch eine erste Induktionsspule geführt wird, um einen Teil der Gegenstandsoberfläche auf eine bestimmte Temperatur vorzuheizen (EP 0 094 759 A2). Der vorgeheizte Teil wird sodann in einem Strom von Metallpulver gebadet, sodass sich das Metallpulver auf ihm niederschlägt. Der so bearbeitete Gegenstand durchläuft hierauf eine zweite Induktionsspule, die den Gegenstand und das Metallpulver auf eine bestimmte Temperatur aufheizt, sodass das Metallpulver mit dem Gegenstand verschmilzt.

In der US-PS 1,980,875 ist eine Einrichtung zum Aufheizen von stabförmigen Werkstücken beschrieben, die in eine Rohrmuffel eingeführt werden, wobei die Muffel induktiv aufgeheizt wird und die wärme in Form von Wärmestrahlung auf das jeweilige Werkstück überträgt. Die Muffel ist von mehreren Induktionsspulen umgeben, die an Wechselstrom unterschiedlicher Frequenz angeschlossen sind und damit Zonen unterschiedlichen Wärmeübertrags in der Rohrmuffel erzeugen.

Der Erfindung liegt deshalb die Aufgabe zugrunde, eine schnelle Aufheizung von Werkstücken, insbesondere von Turbinenschaufeln, vor einer Beschichtung zu ermöglichen.

Diese Aufgabe wird gemäß den Merkmalen der Patentansprüche 1, 2 oder 19 gelöst.

Die Erfindung betrifft somit eine Einrichtung und ein Verfahren zum Aufheizen eines Werkstücks aus Metall, beispielsweise einer Turbinenschaufel. Eine solche Turbinenschaufel besteht aus einem massereichen Schaufelfuß und einem massearmen Schaufelblatt. Damit Schaufelfuß und Schaufelblatt in der für sie geeigneten Weise erhitzt werden können, ist eine Induktionsspule vorgesehen, die Schaufelfuß und Schaufelblatt umgibt. Durch geeignete Wahl der Frequenzen der Wechselströme, welche die Induktionsspule durchfließen und/oder durch das Zwischenschalten eines Suszeptors zwischen Turbinenschaufel und Induktionsspule können Schaufelfuß und Schaufelblatt in geeigneter Weise aufgeheizt werden.

Der mit der Erfindung erzielte Vorteil besteht insbesondere darin, dass die Wärme nicht mittels Wärmeleitung von außen ins Werkstück eindringen muss, sondern im Werkstück entsteht. Dabei kann die Wärme gleichmäßig oder ungleichmäßig über das Werkstück verteilt werden, etwa indem die Spulensteigung oder der Spulendurchmesser in Abhängigkeit von der Längsachse der Spule verändert wird. Auch durch verschiedene Abschirmungen um das Werkstück herum oder durch die Wahl verschiedener Frequenzen lässt sich die Wärmeverteilung steuern.

Ausführungsbeispiele der Erfindung sind in den Zeichnungen dargestellt und werden im Folgenden näher beschrieben. Es zeigen:

Fig. 1    eine Draufsicht auf einen Teil einer zu bearbeitenden Turbinenschaufel;
Fig. 2    eine Seitenansicht auf den in der Fig. 1 dargestellten Teil der Turbinenschaufel;
Fig. 3    die in den Fig. 1 und 2 dargestellte Turbinenschaufel mit einer Halterung für Bearbeitungsvorgänge;
Fig. 4    die Halterung gemäß Fig. 3 ohne eine Turbinenschaufel und um 90 Grad gedreht;
Fig. 5    eine Ansicht A - A gemäß Fig. 3 auf die Turbinenschaufel;
Fig. 6    eine Ansicht B auf die Halterung der Turbinenschaufel;
Fig. 7    eine Prinzipdarstellung einer ersten Variante der erfindungsgemäßen Heizeinrichtung;
Fig. 8    eine Prinzipdarstellung einer zweiten Variante der erfindungsgemäßen Heizeinrichtung;
Fig. 9    eine perspektivische Ansicht einer Beschichtungsanlage, in der sich eine erfindungsgemäße Heizeinrichtung befindet;
Fig. 10   eine Ansicht von oben auf die in der Fig. 3 dargestellte Beschichtungsanlage;
Fig. 11   einen Querschnitt durch die in der Fig. 4 dargestellte Beschichtungsanlage;
Fig. 12   eine induktive Heizeinrichtung für eine Turbinenschaufel, wobei die Induktionsspule verschiedene Steigungen aufweist;
Fig. 13   eine induktive Heizeinrichtung für eine Turbinenschaufel, bei welcher die Induktionsspule in zwei Bereiche mit jeweils verschiedenen Durchmessern aufgeteilt ist;
Fig. 14   eine induktive Heizeinrichtung für eine Turbinenschaufel, wobei zwei voneinander getrennte Spulen vorgesehen sind, die zwar gleiche Steigungen, aber verschiedene Durchmesser besitzen.

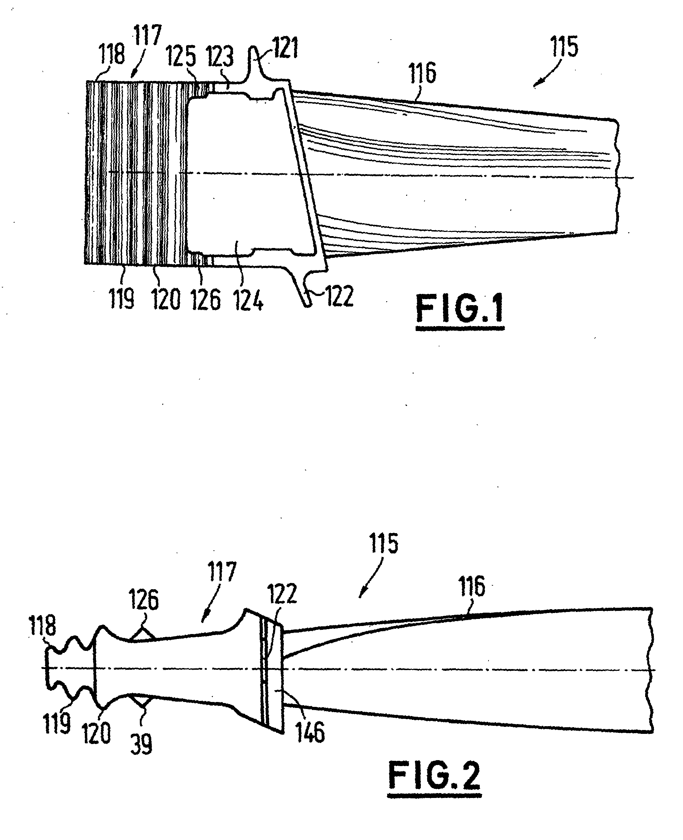

In der Fig. 1 ist ein Teil einer Turbinenschaufel 115 dargestellt, die einen Schaufelflügel 116 und einen Schaufelfuß 117 aufweist. Der Schaufelfuß 117 ist mit Halteorganen versehen, mit denen er an einer nicht dargestellten Turbinenwelle befestigt werden kann. Bei diesen Halteorganen handelt es sich unter anderem um hochpräzise gearbeitete Zähne 118, 119, 120 sowie um Anschläge 121, 122. Die Anschläge 121, 122 sind Teil eines Rahmens 123, der gegenüber einer zentralen Fläche 124 etwas erhöht ist, d. h. die Fläche 124 stellt eine Art Vertiefung dar.

Mit 125 und 126 sind Erhöhungen bezeichnet, die ebenfalls zur Halterung oder Arretierung dienen.

Die Turbinenschaufel weist eine unregelmäßige Oberfläche auf, was eine Erwärmung mit konventionellen Mitteln erschwert. Varianten der in den Fig. 1 und 2 dargestellten Turbinenschaufel sind in den Fig. 1 und 2 der US-PS 5 106 266 (Borns et al.) dargestellt.

Die Fig. 2 zeigt die gleiche Turbinenschaufel 115 wie die Fig. 1, jedoch in einer Position, die gegenüber der Position der Fig. 1 um 90 Grad um die Längsachse der Turbinenschaufel gedreht ist. Man erkennt hierbei den Anschlag 122 sowie die Erhöhungen 126, 39, wobei die Erhöhung 39 der Erhöhung 126 gegenüberliegt.

Da der Schaufelfuß 117 hochpräzise gearbeitet ist, darf er nicht beschichtet werden, um spätere Einpassprobleme auszuschließen. Gegenstand der Beschichtung ist somit nur der Schaufelflügel 116, der nur teilweise dargestellt ist.

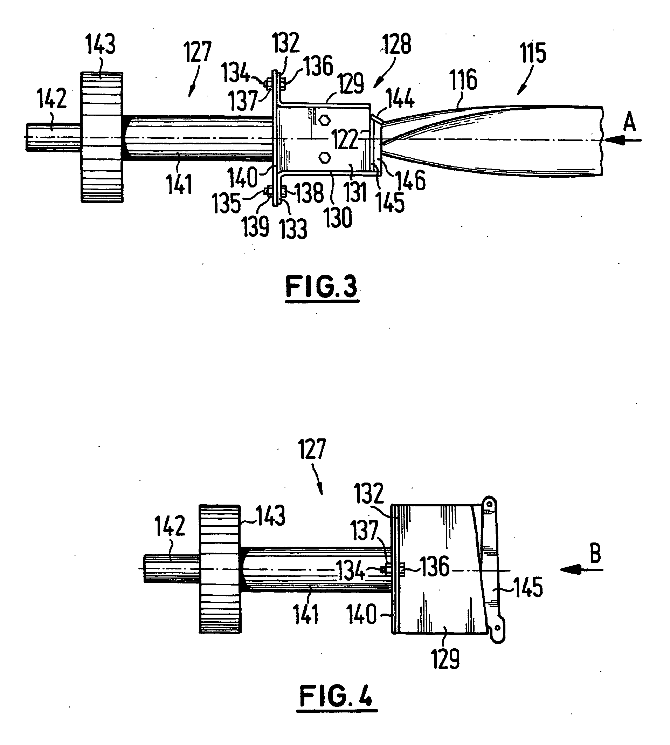

In der Fig. 3 ist die Turbinenschaufel 115 zusammen mit einer Halterung 127 gezeigt, die nur zum Zwecke der Bearbeitung, z. B. der Erwärmung von Turbinenschaufel 115 und Turbinenfuß 117 angebracht wird. Die Turbinenschaufel 115 nimmt hierbei die gleiche Position ein wie in Fig. 2. Der Schaufelfuß 117 ist in der Fig. 3 nicht zu erkennen, weil er von einem Kasten oder Stützgehäuse 128 umgeben ist. Dieser Kasten 128 ist vorgesehen, um den Schaufelfuß 117 vor Beschädigungen und Bedampfungen zu schützen.

Von den vier Wänden dieses Kastens 128 sind drei in Fig. 3 zu erkennen: ein oberer Boden 129, ein unterer Boden 130 und eine Seitenwand 131. Die beiden Böden 129, 130 gehen in Laschen 132, 133 über, die rechtwinklig zu diesen Böden 129, 130 verlaufen und über Schrauben 134, 135 und Muttern 136 bis 139 mit einer Scheibe 140 verbunden sind. Diese Scheibe 140 ist ihrerseits mit einem ersten Rohr 141 verbunden, das mit einem zweiten Rohr 142 in Verbindung steht. Mit dem ersten Rohr 141 verbunden ist eine Hülse 143, die in Richtung zu dem zweiten Rohr 142 offen ist. Mit 144 und 145 sind Halteleisten bezeichnet, die auf einem Schaft 146 aufliegen.

In der Fig. 4 ist die Halterung 127 ohne die Turbinenschaufel 115 dargestellt, und zwar im Vergleich zu Fig. 3 um 90 Grad um die Längsachse gedreht. Die Halteleiste 144 ist dabei weggenommen, sodass man nur die untere Halteleiste 145 erkennt.

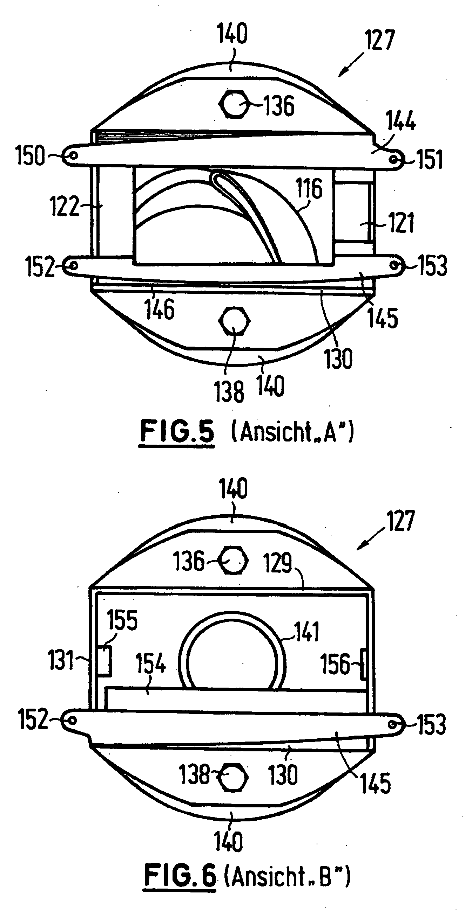

Die Fig. 5 zeigt eine Ansicht "A" gemäß Fig. 3 auf die Turbinenschaufel 115 und ihre Halterung. Die beiden Halteleisten 144, 145 sind an ihren Enden mit Durchbohrungen 150 bis 153 versehen, über die sie miteinander verbunden werden können, beispielsweise indem Stäbe durch die Löcher 151 und 153 bzw. 150 und 152 gesteckt und an ihren Enden arretiert werden.

Die gleiche Ansicht der Halterung 127 wie in der Fig. 5 zeigt auch die Fig. 6, jedoch ohne Turbinenschaufel 115 und ohne Halteleiste 144. Man erkennt hierbei Halteelemente 154, 155, 156 sowie das Rohr 141.

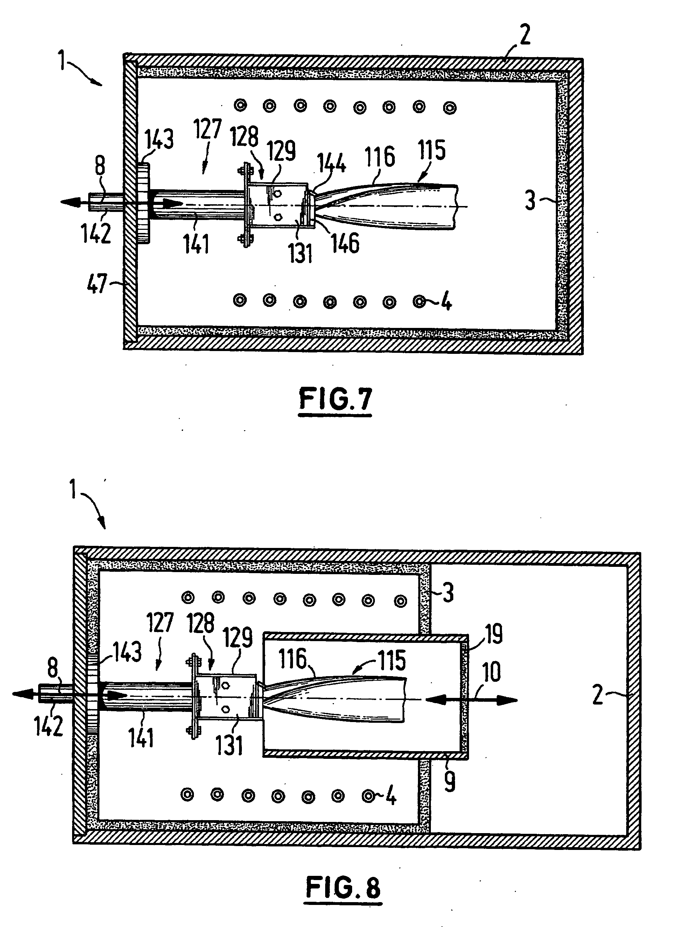

In der Fig. 7 ist schematisch eine Heizkammer 1 dargestellt, die ein äußeres Gehäuse 2 und eine Wärmedämmschicht 3 aufweist. Die Wärmedämmschicht 3 kann für den Betrieb im Vakuum als Paket von Stahlblechen oder Graphitfilz und bei einem Betrieb unter Normalatmosphäre als Keramikfaser-Isolierung ausgeführt werden. Im Innern der Heizkammer 1 befindet sich eine Induktionsspule 4, welche den Turbinenflügel 116 und den Schaufelfuß 117 im Kasten 128 umgibt. Ein Doppelpfeil 8 deutet an, dass die Turbinenschaufel 115 in die Heizkammer 1 ein- und aus dieser wieder herausgefahren werden kann. Sie ist dabei mit der Abschlussklappe 47 für die Heizkammer 1 verbunden.

Fließt durch die Induktionsspule 4 ein Wechselstrom, so werden in dem Turbinenflügel 116, in dem Kasten 128 und in dem im Kasten 128 befindlichen Schaufelfuß 117 Induktionsströme oder Wirbelströme erzeugt, die zu einer Erwärmung dieser Bauteile führen. Wirbelströme entstehen bekanntlich immer dann, wenn ein leitfähiger Körper von einem magnetischen Wechselfeld durchsetzt wird. Wirbelströme sind selbst Wechselströme, die in geschlossenen Strömungslinien fließen.

Die Induktionsspule 4 hat wegen der von ihr in den erwähnten Bauteilen erzeugten Wärme die Funktion eines Induktionsofens. Bei den Induktionsöfen wird zwischen Niederfrequenz-Induktionsöfen (ca. 1 - 50 Hz), Mittelfrequenz-Induktionsöfen (ca. 200 Hz - 20 000 Hz) und Hochfrequenz-Induktionsöfen (> 20 000 Hz) unterschieden. Im vorliegenden Fall liegen die Frequenzen zwischen 50 Hz und 100 kHz. Die Induktionsspule 4 ist in der Fig. 7 zwar als lineares Gebilde dargestellt, doch wird sie bei einer bevorzugten Ausführungsform an die Kontur der Turbinenschaufel 115 angepasst, was weiter unten noch näher beschrieben wird.

Eine wichtige Rolle spielt bei der induktiven Erwärmung die spezifische Wärmeleistung, d. h. die in der Volumeneinheit etwa eines Zylinders in Wärme umgewandelte Leistung. Für diese gilt bei einem Zylinder:

$$\frac{P}{V} = \frac{P_1 A}{V} = P_1 \frac{2r_o \pi \ell}{r_o^2 \pi \ell} = \frac{2}{r_o} P_1$$

wobei $r_o$ = Radius eines Zylinders und

$$P_1 = \frac{N^2 I_e^2 K}{2\gamma} \operatorname{Re} \frac{(j-1)J_1(pr_o)}{J_0(pr_o)}$$

wobei

N = Wicklungen je Längeneinheit
$I_e$ = Erregungsstrom
γ = spezifische Leitfähigkeit
K = reziproke Eindringtiefe
$J_0$ = Bessel'sche Funktion nullter Ordnung
$J_1$ = Bessel'sche Funktion erster Ordnung
P = $\sqrt{-j\omega\mu\gamma}$

(vgl. hierzu K. Simonyi: Theoretische Elektrotechnik, Berlin 1956, S. 303 - 305).

Hieraus ist ersichtlich, dass die Wechselstromfrequenz, bei welcher die spezifische Wärmeleistung pro Volumeneinheit ein Maximum erreicht, von der elektrischen Leitfähigkeit des Materials abhängt.

Für die Aufheizung der Turbinenschaufel 115 wird demgemäß eine Wechselstromfrequenz gewählt, welche den größten Aufheizeffekt ergibt. Diese Wechselstromfrequenz kann experimentell bestimmt werden. Bevorzugt werden Wechselstromfrequenzen zwischen 50 Hz und 2 000 Hz verwendet.

Im Bereich des Schaufelfußes 117 der Turbinenschaufel 115 befindet sich die bereits erwähnte Halterung in Form eines Kastens 128, der den Schaufelfuß 117 umgibt. Mit diesem Kasten 128 wird die Turbinenschaufel 115 gehalten und nach einem vorgegebenen Programm bewegt, was durch den Doppelpfeil 8 angedeutet ist. Der als Halterung dienende Kasten 128 hat, wie bereits erwähnt, auch die Aufgabe, den Fußbereich vor Bedampfung zu schützen. Hierdurch wird aber auch die Einwirkung von Wärme auf den Schaufelfuß behindert.

Die Eindringtiefe bei induktiver Erwärmung kann indessen so gesteuert werden, dass der Kasten 128 weitaus weniger Wirbelstromenergie verbraucht als der Schaufelfuß 117.

Die Berechnung der Leistungsverteilung in dem Schaufelflügel 116 einerseits und in dem Schaufelfuß 117 bzw. in dem den Fuß umgebenden Kasten 128 andererseits ist nur mit vereinfachenden Annahmen und näherungsweise durchzuführen.

Nimmt man beispielsweise vereinfachend an, der Schaufelflügel 116, der Schaufelfuß 117 und der Kasten 128 seien als Hohlzylinder ausgebildet, so ergeben sich bei den nachfolgend angegebenen Verhältnissen:

| | |
|---|---|
| Material von Schaufelflügel 116, Schaufelfuß 117 und Kasten 128 | Legierung auf Nickelbasis ($\rho = 5 \times 10^{-7}$ Ωm, $\mu_r = 1,1$) |
| Wandstärke des Schaufelflügels 116 | 6 mm |
| Innendurchmesser des Schaufelflügels 116 | 34 mm |
| Länge des Schaufelflügels 116 | 320 mm |
| Wandstärke des Schaufelfußes 117 | 25-35 mm |
| Innendurchmesser des Schaufelfußes 117 | 60 mm |
| Länge des Schaufelfußes 117 | 180 mm |
| Wandstärke des Kastens 128 | 2 mm |

Spule mit 6 Windungen als induzierte Leistungen in den einzelnen Bauteilen folgende Leistungsverteilungen:

| | Gesamt | Kasten 128 | Schaufelfuß 117 | Schaufelflügel 116 |
|---|---|---|---|---|
| Leistung (100Hz, 50V, 41kA) | ca. 210 kW | ca. 15 kW | ca. 60 kW | ca. 13 kW |
| Leistung (800Hz, 150V, 18kA) | ca. 230 kW | ca. 47 kW | ca. 47 kW | ca. 56 kW |
| Leistung (2000Hz, 250V, 13kA) | ca. 200 kW | ca. 73 kW | ca. 29 kW | ca. 42 kW |

Bei der niedrigen Frequenz von 100 Hz beträgt somit die im Kasten 128 induzierte Leistung noch 1/4 von der im Schaufelfuß 117 induzierten Leistung, obwohl die Eindringtiefe bei einer Legierung auf Nickelbasis bei 100 Hz ziemlich groß ist, nämlich etwa 35 mm.

Die Eindringtiefe δ ist bekanntlich definiert durch $\delta = 1 / \sqrt{\pi\, f\, \sigma\, \mu}$, wobei f die Frequenz, μ die magnetische Permeabilität und σ die spezifische elektrische Leitfähigkeit bedeuten. Einige Beispiele für die Eindringtiefe ergeben sich aus nachfolgender Tabelle.

| f/Hz | | δ/mm | |
|---|---|---|---|
| | Kupfer | Aluminium | Eisen $\mu_r = 200$ |
| 50 | 9,44 | 12,3 | 1,8 |
| $10^2$ | 6,67 | 8,7 | 1,3 |
| $10^3$ | 2,11 | 2,75 | 0,41 |
| $10^4$ | 0,667 | 0,87 | 0,13 |

Auch mit Hilfe alternativer Modellberechnungen wurde festgestellt, dass sich das Verhältnis der in dem Kasten 128 induzierten Leistung zu der im Schaufelfuß 116 induzierten Leistung mit steigender Frequenz vergrößert.

Bei einer Frequenz von ca. 800 Hz wird in dem Kasten 128 ungefähr die gleiche Leistung induziert wie in dem Schaufelfuß 116. Bei noch höheren Frequenzen wird in dem Kasten 128 mehr Leistung induziert als im Schaufelfuß 116.

Etwa ähnlich verändert sich auch das Verhältnis zwischen der im Schaufelfuß 116 induzierten Leistung und der im Schaufelflügel 117 induzierten Leistung. Allerdings sinkt die im Schaufelflügel 117 induzierte Leistung wieder bei hoher Frequenz ab, jedenfalls bei dem vereinfachten Modell.

Wegen der geringeren Masse des Kastens 128 im Vergleich zum Schaufelfuß 116 wird der Kasten 128 bei einer Frequenz von > 800 Hz schneller erwärmt als der Schaufelfuß 116. Dasselbe gilt auch für den Schaufelflügel 117. Wegen des Temperaturlimits am Schaufelfuß 117 und am Kasten 128 kann der Erwärmungsprozess nicht zu einer merklichen Verkürzung der Erwärmungsdauer im Vergleich zu konventionellen Erwärmungsprozessen mittels Widerstands-Heizung (Wärmestrahlen) führen.

Für hohe Frequenzen kann der Kasten 128 geschlitzt werden, um die Wirbelströme und damit die im Kasten 128 induzierten Leistungen zu reduzieren. Der Kasten 128 kann auch aus schmalen Blechen aufgebaut werden.

Ein geschlitzter Kasten 128 kann zwar die in ihm induzierte Leistung reduzieren, doch bleibt die im Schaufelflügel 116 induzierte Leistung unverändert, d. h. eine zu schnelle Erwärmung des Schaufelflügels 116 ist bei hohen Frequenzen nicht zu vermeiden. Da der Schaufelfuß nicht beschichtet werden soll, würde sich eine Erwärmung des Schaufelfußes an sich erübrigen. Der Schaufelfuß 117 muss jedoch deshalb zusammen mit dem Schaufelflügel 116 erwärmt werden, damit er diesem nicht aufgrund seiner großen Masse die Wärme entzieht.

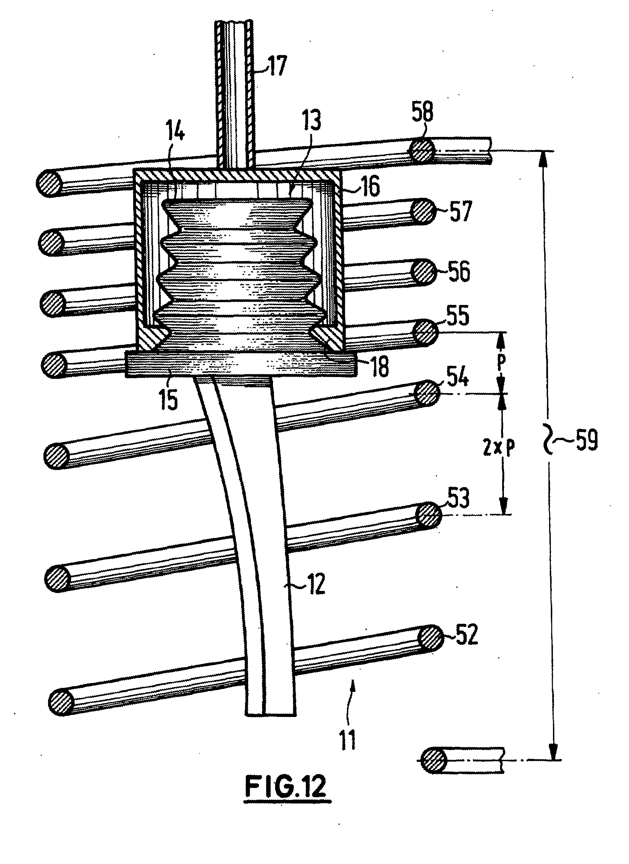

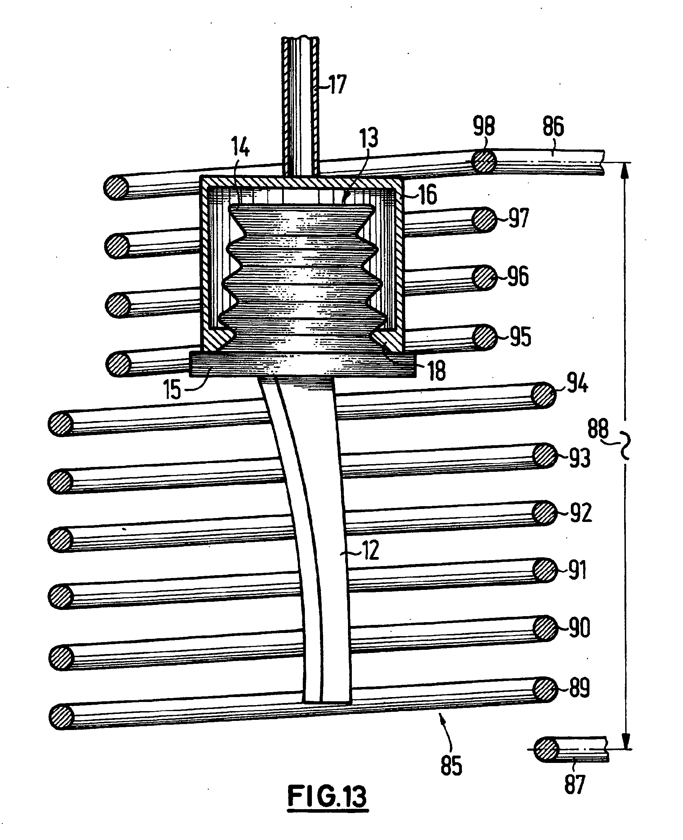

Werden statt einer Spule zwei Spulen verwendet, wie es im Zusammenhang mit den Fig. 12 und 13 weiter unten noch beschrieben wird, so können die Erwärmungen des Schaufelfußes 117 und des Schaufelflügels 116 separat mit unterschiedlichen Frequenzen durchgeführt werden. Unter Beachtung der Strahlungsverluste am Kasten 128 und am Schaufelfuß 117 kann eine relativ gleichmäßige Erwärmung von Kasten 128, Schaufelfuß 117 und Schaufelflügel 116 bei einer Frequenz von < 800 Hz (z. B. 100 Hz) realisiert werden, wodurch auch die gesamte Erwärmungsdauer verkürzt würde. Allerdings tritt hierbei ein relativ großer Leistungsverlust in der Spule 4 auf.

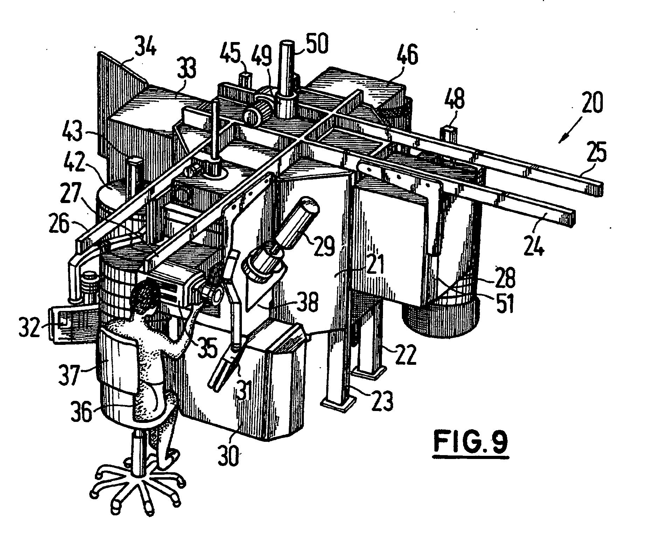

In der Fig. 8 ist eine Variante der Erfindung dargestellt, bei welcher zwischen der Turbinenschaufel 115 und der Wärmedämmung 3 ein Graphitrohr 9 angeordnet ist. Die Heizkammer 2 ist in der Fig. 8 relativ größer als in der Fig. 7, während die Wärmedämmung 3 etwa gleich groß geblieben ist. Das Graphitrohr 9 kann durch eine geeignete Vorrichtung in horizontaler Richtung verschoben werden, was durch den Doppelpfeil 10 angedeutet ist. Hierdurch ist es möglich, die Turbinenschaufel 115 zunächst ohne Verwendung des Graphitrohrs 9 - wenn dieses nach rechts weggeschoben ist - schnell aufzuheizen und anschließend mit Verwendung des Graphitrohrs 9 - wenn dieses wieder nach links über die Turbinenschaufel 115 geschoben ist - eine gleichmäßige über die Turbinenschaufel verteilte Temperatur zu erreichen. Die Turbinenschaufel 115 kann auch nur teilweise in das als Suszeptor dienende Graphitrohr 9 eingeführt werden. Hierdurch wird der Fuß 117 der Turbinenschaufel 115 induktiv und der Schaufelflügel 116 über die Wärmestrahlung des Suszeptors 9 beheizt.

Bei einer besonderen Variante der in der Fig. 8 gezeigten Ausführungsform kann der Suszeptor 9, der z. B. aus Graphit oder einem anderen geeigneten Material besteht und an einem Ende mit einer Wärmedämmplatte 19 abgeschlossen ist, auch permanent die Turbinenschaufel 115 umgeben und trotzdem zwischen Schnell- und Konstantheizung umgeschaltet werden. Hierbei wird die Frequenz des durch die Induktionsspule 4 fließenden Wechselstroms von einer ersten auf eine zweite Frequenz verändert. Bei der ersten Frequenz greift das Feld gewissermaßen durch den Suszeptor 9, ohne diesen stark zu erwärmen, wobei nur die Turbinenschaufel 115 erwärmt wird, während bei der zweiten Frequenz im Wesentlichen nur das Graphitrohr 9 erwärmt wird. Mit der Induktionsspule 4 kann nicht nur ein Bauteil, beispielsweise eine Turbinenschaufel 115 erwärmt werden, sondern es ist auch möglich, eine zweite Turbinenschaufel oder noch mehr Turbinenschaufeln aufzuwärmen.

Das Graphitrohr 9 ist in der Fig. 8 nur beispielhaft gezeigt. Wesentlich ist, dass das Werkstück, hier die Turbinenschaufel 115, von einem elektrisch leitfähigen Bauteil umgeben ist, damit die induktive Erwärmung von der Turbinenschaufel ferngehalten werden kann.

Das Graphitrohr 9 kann auch dazu verwendet werden, das Schaufelblatt 116 abzudecken und den Schaufelfuß 117 frei zu lassen, sodass das Schaufelblatt 116 mittelbar über das erwärmte Graphitrohr 9 durch Wärmestrahlung und Konvektion erhitzt wird, während der Schaufelfuß 117 direkt über Wirbelströme aufgeheizt wird. Statt Graphit kann für das Rohr 9 auch ein anderes geeignetes Material verwendet werden.

Wie sich aus der im Zusammenhang mit der Fig. 7 beschriebenen Modellrechnung ergibt, ändert sich das Verhältnis der im Schaufelfuß 117 umgesetzten induktiven Wirbelstromleistung im Verhältnis zu der im Kasten 128 umgesetzten induktiven Wirbelstromleistung mit der Frequenz. Wird die Frequenz verringert, ist der Anteil der im Schaufelfuß 117 umgesetzten Leistung relativ größer.

Indem man die Frequenz ändert, kann man folglich das Leistungsverhältnis ändern. Dies bedeutet im Falle der Variante gemäß Fig. 8, dass durch Veränderung der Frequenz des Wechselstroms einmal die größere Leistung im Suszeptor 9 und einmal im Schaufelflügel 116 umgesetzt wird. Man kann also gewissermaßen von einer überwiegend induktiven Erwärmung des Schaufelflügels 116 - wenn eine niedrige Frequenz gewählt wird - auf eine überwiegende Strahlungserwärmung - wenn eine hohe Frequenz gewählt wird - umschalten.

In der Fig. 9 ist eine Beschichtungsanlage 20 gezeigt, die eine induktive Aufheizeinrichtung gemäß den Fig. 7 und 8 enthält. Eine derartige Beschichtungsanlage ist in ähnlicher form bereits aus der DE 197 15 245 A1 bzw. der DE 198 19 726 A1 bekannt. Bei dieser Beschichtungsanlage 20 handelt es sich um einen sogenannten "Clustercoater", der ein modulares System darstellt, bei dem verschiedene Prozessmodule in beliebiger Weise an einer zentralen Bearbeitungs- oder "Handlingskammer" 21 angeordnet werden können. Eine im Querschnitt achteckige Bearbeitungskammer 21, die auf mehreren Stützen steht, von denen man in der Fig. 9 nur zwei Stützen 22, 23 erkennt, weist auf ihrer Oberseite mehrere Trägerschienen 24, 25; 26, 27 auf, an denen verschiedene Vorrichtungen angebracht sind. Die beiden parallel zueinander verlaufenden Schienen 24, 25 tragen z. B. eine erfindungsgemäße Aufheizkammer 51, wobei sich neben dieser Aufheizkammer 51 eine Vakuumpumpe 28 befindet. Diese Aufheizkammer 51 entspricht funktionsmäßig der Aufheizkammer 1 gemäß den Fig. 1 oder 2. Um 90 Grad versetzt zur Aufheizkammer 51 ist eine Vor- oder Nachbehandlungskammer 46. Wieder um 90 Grad versetzt zur Vor- oder Nachbehandlungskammer 46 ist eine Be- und Entladekammer 33, deren Tür 34 in geöffnetem Zustand dargestellt ist. Zwischen der Vor- und Nachbehandlungskammer 46 und der Be- und Entladekammer 33 ist eine Vakuumpumpe 44 vorgesehen, die direkt an die Bearbeitungskammer 21 angeflanscht ist.

Gegenüber der Nachbehandlungskammer 46 und um 90 Grad versetzt zur Aufheizkammer 51 befindet sich eine Beschichtungskammer 38, an die eine Elektronenstrahlkanone 29 angeflanscht ist. An dieser Beschichtungskammer 38 ist außerdem eine Vakuumpumpe 42 angeordnet. Mittels der Elektronenstrahlkammer wird z. B. eine Beschichtung mittels des EB/DVD (= Electron Beam Directional Vapor Deposition)-Verfahrens durchgeführt. Es ist aber auch möglich, die Beschichtung mittels eines EB/PVD (= Electron Beam Physical Vapor Deposition)-Verfahrens durchzuführen.

Vor der Beschichtungskammer 38 sitzt eine Bedienungsperson 36 auf einem Stuhl 37 und schaut durch ein Beobachtungsfenster 35 in die Beschichtungskammer. Neben der Bedienungsperson 36 sind zwei Monitore 31, 32 vorgesehen, die an den Trägerschienen 27, 26 befestigt sind.

Der Betrieb mit der in der Fig. 9 gezeigten Beschichtungsanlage 20 kann z. B. in der Weise erfolgen, dass ein Werkstück zunächst durch die Be- und Entladekammer 33 eingeschleust und dann der Aufheizkammer 51 zugeführt wird, wo eine induktive Aufheizung stattfindet. Wie diese induktive Heizung durchgeführt wird, wurde bereits im Zusammenhang mit den Fig. 1 bis 8 beschrieben. Im Anschluss an den Aufheizvorgang wird das Werkstück in die Beschichtungskammer 38 eingebracht, wo eine Beschichtung erfolgt. Nach dem Beschichten wird das Werkstück in die Nachbehandlungskammer 46 eingebracht, wo eine Nacherwärmung stattfinden kann. Diese Nacherwärmung kann ebenfalls induktiv erfolgen. Hierauf wird das so bearbeitete Werkstück durch die Be- und Entladekammer 33, die mit einer Schnellkühleinrichtung versehen sein kann, nach draußen gebracht.

Bei der vorstehend beschriebenen Betriebsweise wird das Werkstück nicht im Uhrzeiger- oder Gegenuhrzeigersinn den einzelnen Kammern zugeführt. Es versteht sich jedoch, dass bei entsprechender Anordnung der einzelnen Kammern auch eine Bearbeitung des Werkstücks im Uhr- oder Gegenuhrzeigersinn möglich und sogar sinnvoll ist.

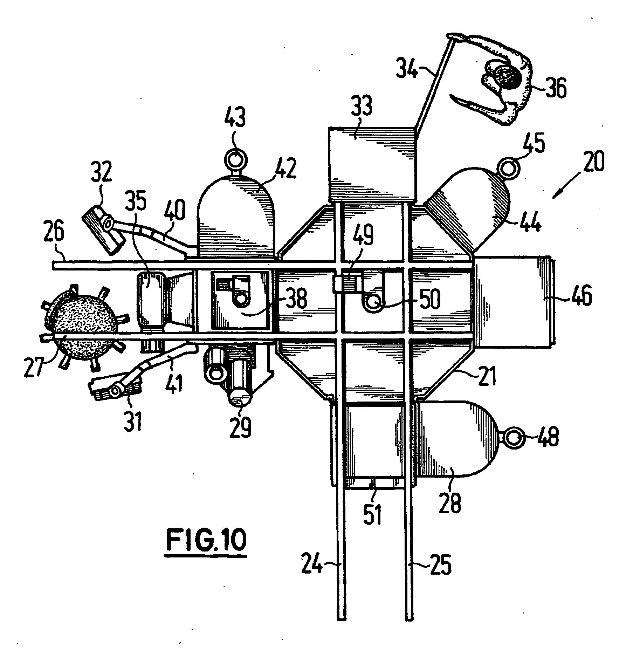

Die gleiche Beschichtungsanlage 20 wie in Fig. 9 ist noch einmal in der Fig. 10 dargestellt, und zwar in einer Ansicht von oben. Bei dieser Darstellung hat die Bedienungsperson 36 ihren Stuhl 37 verlassen und öffnet oder schließt gerade die Tür 34 der Be- oder Entladekammer 33.

Kennzeichnend für die Beschichtungsanlage 20 ist, dass sie die Funktion einer Inline-Anlage erfüllt, ohne den bei einer Inline-Anlage erforderlichen Platz zu beanspruchen. Es können also Werkstücke wie Turbinenschaufeln nacheinander verschiedenen Behandlungen unterworfen werden. Diese verschiedenen Behandlungen finden in den unterschiedlichen Kammern 33, 38, 51, 46 statt. Der Bearbeitungskammer 21 kommt dabei die Aufgabe zu, die zu bearbeitenden Werkstücke automatisch in die jeweiligen Kammern einzubringen und aus diesen wieder herauszuholen. Hierbei ist wesentlich, dass in der Bearbeitungskammer 21 ein Drehmechanismus vorgesehen ist, der die Werkstücke so dreht, dass sie von einer Kammer zu einer anderen Kammer gelangen. Der Drehmechanismus wird über die in der Fig. 9 gezeigte Welle 50 mittels eines Motors 49 angetrieben.

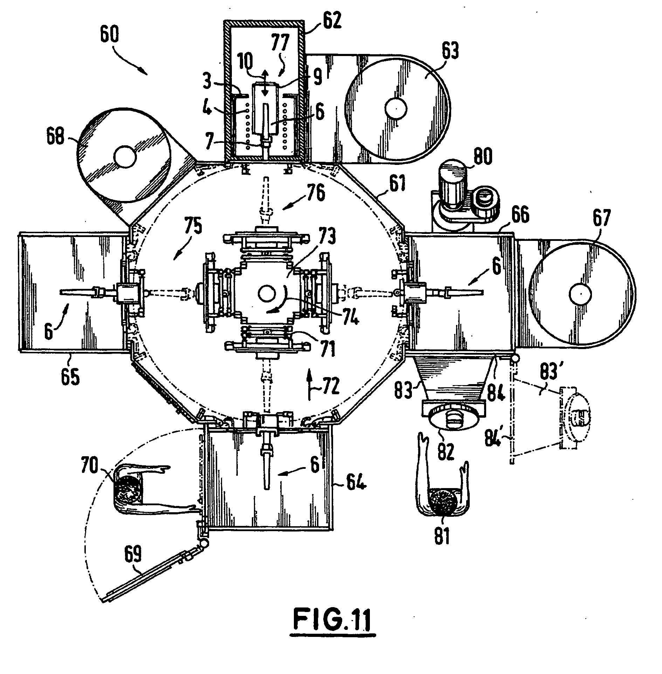

In der Fig. 11 ist eine Variante der in der Fig. 10 gezeigten Beschichtungsanlage im Querschnitt gezeigt. Diese Beschichtungsanlage 60 weist wiederum eine Bearbeitungskammer 61 auf, an die eine Aufheizkammer 62 mit einer Vakuumpumpe 63 angeflanscht ist. Außer der Aufheizkammer 62 sind auch noch eine Be- und Entladekammer 64, eine Vor- bzw. Nachbehandlungskammer 65 und eine Beschichtungskammer 66 an die Bearbeitungskammer 61 angeflanscht. Mit der Beschichtungskammer 66 ist eine Vakuumpumpe 67 verbunden, welche die Beschichtungskammer 66 evakuieren kann. Direkt an die Bearbeitungskammer 61 angekoppelt ist eine weitere Vakuumpumpe 68, welche die Bearbeitungskammer 61 evakuiert.

Eine Turbinenschaufel 6 wird bei geöffneter Tür 69 von einer Bedienungsperson 70 in die Be- und Entladekammer 64 eingebracht und mit einem Mechanismus 71 des Drehgestells 73 verbunden, wobei dieser Mechanismus 71 zur Be- und Entladekammer 64 bewegt und von dieser wieder wegbewegt werden kann, was durch den Pfeil 72 angedeutet ist. Von ihrer Position in der Kammer 64 kann die Turbinenschaufel 6 nun automatisch verschiedenen Bearbeitungsschritten unterworfen werden. Hierzu wird sie von dem Mechanismus 71 in der Bearbeitungskammer 61 in Richtung des Pfeils 72 nach innen gebracht, worauf ein Drehgestell 73, das sich in Richtung eines Pfeils 74 dreht, in eine Position 75 gegenüber der Vorbehandlungskammer 65 gebracht wird. Von dort wird die Turbinenschaufel 6 mittels des Mechanismus 71 in die Vor- bzw. Nachbehandlungskammer 65 eingefahren. Anschließend wird die Turbinenschaufel 6 wieder aus der Kammer 65 herausgenommen und nach einer weiteren 90°-Drehung des Drehgestells 73 im Uhrzeigersinn in die Position 76 gebracht, die der Kammer 62 gegenüberliegt.

Jetzt wird die Turbinenschaufel von dem Mechanismus 71 in die Aufheizkammer 62 geschoben. Diese Aufheizkammer 62 entspricht im Wesentlichen der Kammer 2 gemäß Fig. 8. Nach erfolgter induktiver Aufheizung gelangt die Turbinenschaufel 6 durch eine weitere 90-Grad-Drehung des Drehgestells 73 und eine Linearbewegung des Mechanismus 71 in die Beschichtungskammer 66, wo die Turbinenschaufel mittels einer Elektronenstrahlkanone 80 beschichtet wird. Der Beschichtungsvorgang kann hierbei von einer Bedienungsperson 81 durch ein Fenster 82 beobachtet werden. Dieses Fenster 82 ist Teil eines Ansatzes 83, der mit einer Tür 84 verbunden ist.

Nach der Beschichtung der Turbinenschaufel 6 kann diese durch Öffnen der Tür 84 aus der Beschichtungskammer 66 genommen werden.

Tür bzw. Ansatz sind in der Fig. 11 im geöffneten Zustand mit 84' bzw. 83' bezeichnet.

Es versteht sich, dass während der Zeit, in welcher die beschriebene Turbinenschaufel die verschiedenen Bearbeitungsstationen durchläuft, weitere drei Turbinenschaufeln bearbeitet werden können, die jeweils einen 90-Grad-Abstand zueinander haben. Jede dieser Turbinenschaufeln befindet sich dann in einem anderen Rearbeitungsstatus.

In der Fig. 12 ist eine Induktionsspule 11 dargestellt, die Windungen unterschiedlicher Steigung aufweist. Drei Windungen 52, 53, 54 besitzen eine relativ große Steigung, während vier andere Windungen 55, 56, 57, 58 eine relativ kleine Steigung besitzen. Die Windungen 52, 53, 54 mit der großen Steigung umgeben ein Schaufelblatt 12, während die Windungen 55, 56, 57 mit der relativ kleinen Steigung einen Schaufelfuß 13 umgeben. Der Schaufelfuß 13 besteht bei diesem Beispiel aus einem mit einem Gewinde 14 versehenen Teil und einem Flansch 15, an den das Schaufelblatt 12 anschließt.

Mit dem Schaufelfuß 13 ist ein Träger gekoppelt, der aus einer zylindrischen Metallhülse 16 und einer Stange 17 besteht. Diese Metallhülse 16 entspricht funktionsmäßig dem Kasten 128 in den Fig. 3 bis 8. Die Metallhülse 16 weist an ihrem offenen Ende eine ringförmig ausgebildete und nach innen ragende Nase 18 auf, die in das Gewinde 14 des Schaufelfußes 13 eingreift.

Mit 59 ist eine Wechselspannungsquelle bezeichnet, die an beiden Windungen der Induktionsspule 11 anliegt, d. h. die Windungen 52 bis 54 bzw. 55 bis 58 der Induktionsspule 11 sind in Reihe geschaltet.

Die Fig. 13 zeigt die gleiche Turbinenschaufel wie die Fig. 12. Die Induktionsspule 85 ist hierbei zwar ein einheitliches Gebilde, aber mit Spulenteilen, die gleiche Steigungen bei verschiedenen Durchmessern aufweisen. Die Induktionsspule 85 ist mit ihren Enden 86, 87 an eine Wechselspannungsquelle 88 angeschlossen. Sechs sichtbare Windungen 89 bis 94 weisen bei einer vorgegebenen Steigung einen relativ großen Durchmesser auf, während vier andere sichtbare Windungen 95 bis 98 bei gleicher Steigung einen kleineren Durchmesser aufweisen.

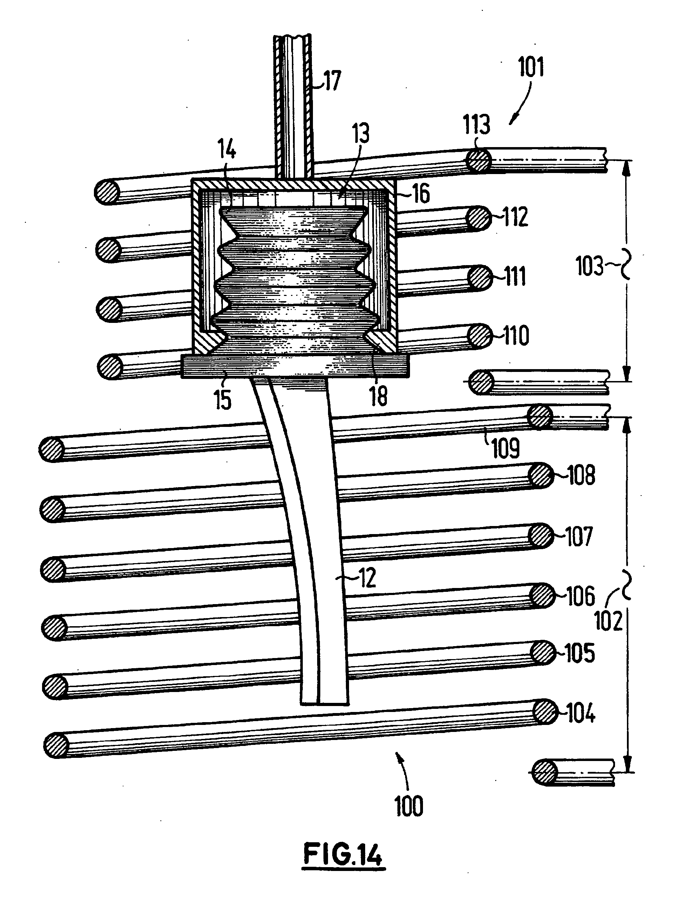

Eine weitere Variante der Induktionsspule zeigt die Fig. 14. Bei diesem Ausführungsbeispiel ist die Turbinenschaufel wieder die gleiche wie in den beiden vorangegangenen Figuren. Die Spule ist jedoch in zwei Einzelspulen 100, 101 aufgeteilt, die an zwei getrennten Wechselspannungsquellen 102, 103 liegen. Die Windungen 104 bis 109 der einen Einzelspule 100 weisen zwar die gleiche Steigung auf wie die Windungen 110 bis 113 der anderen Einzelspule 101, doch besitzen sie einen anderen Durchmesser. Der Durchmesser der Windungen 104 bis 109 ist größer als derjenige der Windungen 110 bis 113, damit der Fuß 13 der Turbinenschaufel stärker aufgeheizt wird als das Schaufelblatt 12.

Wie vorstehend beschrieben, dient das Aufheizen der Turbinenschaufel dazu, das Schaufelblatt mit einer Schutzschicht versehen zu können, beispielsweise mit einer Keramikschicht.

Bevor das Aufheizen durchgeführt wird, kann zur Verbesserung der Lebensdauer einer Turbinenschaufel die Schaufel einem Tiefgefrierungsverfahren unterworfen werden. Wie Versuche von Robert Brunson (DER SPIEGEL, 40/2000, S. 259) gezeigt haben, sind Metallteile, die - je nach Material - zuerst Kälteschocks zwischen minus 110 und minus 200 Grad Celsius ausgesetzt und anschließend auf 80 bis 600 Grad erhitzt werden, besonders langlebig. Nach der Prozedur, die wahrscheinlich die molekulare Struktur des Materials neu ordnet, waren die Werkteile nicht nur langlebiger, sondern auch weniger anfällig für Risse. Die Bremsklötze für Fahrwerke von Düsenmaschinen hatten eine um fast 200 Prozent erhöhte Lebensdauer. Tiefgekühlte Titanbohrer erreichten die doppelte Bohrleistung herkömmlicher Produkte.

## Patentansprüche

1. Einrichtung zum Aufheizen eines Werkstücks (6, 115) aus einem induktiv aufheizbaren Material, wobei wenigstens eine Induktionsspule (4, 11, 85) vorgesehen ist, die das Werkstück (6, 115) wenigstens teilweise umgibt und die an eine Wechselstromquelle anschließbar ist, **dadurch gekennzeichnet, dass** der Wechselstrom auf verschiedene Frequenzen einstellbar ist, wobei bei einer ersten Frequenz wenigstens ein vorgegebener Bereich des Werkstücks (6, 115) induktiv erwärmt wird, während bei einer zweiten Frequenz ein von dem vorgegebenen Bereich verschiedener Gegenstand (z. B. 9) induktiv erwärmt wird, wobei dieser Gegenstand ein zweiter Bereich des gleichen Werkstücks (6, 115) ist.

2. Einrichtung zum Aufheizen eines Werkstücks (6, 115), das ein induktiv aufheizbares Material enthält, wobei wenigstens eine Induktionsspule (4, 11, 85) vorgesehen ist, die das Werkstück (6, 115) wenigstens teilweise umgibt und die an eine Wechselstromquelle anschließbar ist, und wobei zwischen dem Werkstück (6, 115) und der Induktionsspule (4, 11, 85) ein Suszeptor (9) vorgesehen ist, **dadurch gekennzeichnet, dass** der Suszeptor (9) relativ zum Werkstück (6, 115) verschiebbar ist, sodass Teile dieses Werkstücks (6, 115) der Induktionsspule (4, 11, 85) direkt gegenüberliegen, während andere Teile durch den Suszeptor (9) gegenüber der Induktionsspule (4, 11, 85) abgedeckt werden.

3. Einrichtung zum Aufheizen eines Werkstücks (6, 115) aus einem induktiv aufheizbaren Material, wobei wenigstens eine Induktionsspule (4, 11, 85) vorgesehen ist, die das Werkstück (6, 115) wenigstens teilweise umgibt und die an eine Wechselstromquelle anschließbar ist, **dadurch gekennzeichnet, dass** der Wechselstrom auf verschiedene Frequenzen einstellbar ist, wobei bei einer ersten Frequenz wenigstens ein vorgegebener Bereich des Werkstücks (6, 115) induktiv erwärmt wird, während bei einer zweiten Frequenz ein von dem vorgegebenen Bereich verschiedener Gegenstand (z. B. 9) induktiv erwärmt wird, wobei dieser Gegenstand ein Suszeptor (9) ist.

4. Einrichtung nach Anspruch 3, **dadurch gekennzeichnet, dass** der Suszeptor (9) relativ zu dem Werkstück (6, 115) bewegbar ist.

5. Einrichtung nach denAnsprüchen 3 oder 4 **dadurch gekennzeichnet, dass** der Suszeptor (9) zwischen der Induktionsspule (4, 11, 85) und wenigstens Teilbereichen des Werkstücks (6, 115) vorgesehen ist.

6. Einrichtung nach den Ansprüchen 2, 3, 4 oder 5, **dadurch gekennzeichnet, dass** der Suszeptor (9) die Form eines Rohrs aufweist, das wenigstens über Teilbereiche des Werkstücks (6, 115) gestülpt werden kann.

7. Einrichtung nach den Ansprüchen 1, 2 oder 3, **dadurch gekennzeichnet, dass** das Werkstück (6, 115) eine unregelmäßige Oberfläche besitzt.

8. Einrichtung nach den Ansprüchen 1, 2 oder 3, **dadurch gekennzeichnet, dass** das Werkstück eine Turbinenschaufel (6, 115) ist, deren massearmes Schaufelblatt (116) vom Suszeptor (9) umgeben ist, während der massereiche Schaufelfuß (117) außerhalb des Suszeptors (9) liegt.

9. Einrichtung nach den Ansprüchen 1, 2 oder 3 **dadurch gekennzeichnet, dass** das Werkstück eine Turbinenschaufel (6, 115) ist, deren Schaufelfuß (117) von einem Gehäuse (128) umgeben ist, das Teil einer Halterung ist.

10. Einrichtung nach Anspruch 8, **dadurch gekennzeichnet, dass** der Wechselstrom auf wenigstens zwei verschiedene Frequenzen einstellbar ist, wobei die erste Frequenz eine maximale induktive Erwärmung des Schaufelfußes (117) und die zweite Frequenz eine maximale induktive Erwärmung des Suszeptors (9) bewirkt.

11. Einrichtung nach Anspruch 8, **dadurch gekennzeichnet, dass** der Wechselstrom auf wenigstens zwei verschiedene Frequenzen einstellbar ist, wobei die erste Frequenz eine maximale induktive Erwärmung des Schaufelblatts (116) und die zweite Frequenz eine maximale induktive Erwärmung des Suszeptors (9) bewirkt.

12. Einrichtung nach den Ansprüchen 1, 2 oder 3, **dadurch gekennzeichnet, dass** die Induktionsspule (11) Bereiche (52 bis 54; 55 bis 58) mit verschiedenen Windungssteigungen aufweist.

13. Einrichtung nach den Ansprüchen 1, 2 oder 3, **dadurch gekennzeichnet, dass** die Induktionsspule (85) Bereiche (89 bis 94; 95 bis 98) mit verschiedenen Windungsdurchmessern aufweist.

14. Einrichtung nach Anspruch 13, **dadurch gekennzeichnet, dass** mehrere Induktionsspulen (100, 101) vorgesehen sind, von denen jede an einer eigenen Wechselstromquelle (102, 103) liegt.

15. Einrichtung nach den Ansprüchen 1, 2 oder 3, **gekennzeichnet durch** eine Heizkammer (1, 62), in der sich eine Induktionsspule (4) befindet, **durch** die ein Werkstück (6, 115) bewegbar ist, das an einem Träger (127, 47, 143) befestigt ist.

16. Einrichtung nach Anspruch 15, **dadurch gekennzeichnet, dass** der Träger (127, 47, 143) mit einem Drehgestell (73) verbunden ist und auf die Heizkammer (1, 62) zu und von dieser wegbewegt werden kann.

17. Einrichtung nach Anspruch 16, **dadurch gekennzeichnet, dass** das Drehgestell (73) den Träger (127, 47, 143) direkt und das Werkstück (6, 115) über einen Mechanismus (71) in verschiedene Kammern einführt.

18. Verfahren für die Beschichtung eines induktiv aufheizbaren Werkstücks, **gekennzeichnet durch** folgende Schritte:

    a) Einbringen des Werkstücks in eine Aufheizkammer (51);
    b) Induktives Aufheizen wenigstens von Teilen des Werkstücks;
    c) Einbringen des aufgeheizten Werkstücks in eine Beschichtungskammer (38);
    d) Beschichten wenigstens von Teilen des Werkstücks;
    e) Einbringen des wenigstens teilweise beschichteten Werkstücks in eine Nachbehandlungskammer (46), wo eine Nacherwärmung stattfindet;

f) Einbringen des nachbehandelten Werkstücks in eine Kammer (33), in der eine Schnellkühlung des Werkstücks stattfindet.

**19.** Verfahren nach Anspruch 18, **dadurch gekennzeichnet, dass** das Werkstück vor dem Einbringen in die Aufheizkammer (51) einer Kältebehandlung ausgesetzt wird.

**Claims**

**1.** A device for heating a workpiece (6, 115) of an inductive heatable material, wherein at least one induction coil (4, 11, 85) is provided which at least partially surrounds the workpiece (6, 115), and which is connectable to an alternating current source, **characterised in that** the alternating current is adjustable to different frequencies, wherein, at a first frequency, at least one predetermined region of the workpiece (6, 115) is inductively heated, whilst at a second frequency an object different from the predetermined region (e.g. 9) is inductively heated, and wherein this object is a second region of the same workpiece (6, 115).

**2.** A device for heating a workpiece (6, 115), which contains an inductively heatable material, wherein at least one induction coil (4, 11, 85) is provided which at least partially surrounds the workpiece (6, 115), and which is connectable to an alternating current source, and wherein a susceptor (9) is provided between the workpiece (6, 115) and the induction coil (4, 11, 85), **characterised in that** the susceptor (9) is displaceable relative to the workpiece (6, 115), so that parts of this workpiece (6, 115) lie directly opposite to the induction coil (4, 11, 85), whilst other parts are covered by the susceptor (9) opposite the induction coil (4, 11, 85).

**3.** A device for heating a workpiece (6, 115) of an inductively heatable material, wherein at least one induction coil (4, 11, 85) is provided which at least partially surrounds the workpiece (6, 115) and is connectable to an alternating current source, **characterised in that** the alternating current is adjustable to different frequencies, wherein at least one predetermined region of the workpiece (6, 115) is inductively heated at a first frequency, whilst an object different from the predetermined region (e.g. 9) is inductively heated at a second frequency, wherein this object is a susceptor (9).

**4.** The device according to Claim 3, **characterised in that** the susceptor (9) is movable relative to the workpiece (6, 115).

**5.** The device according to Claims 3 or 4, **characterised in that** the susceptor (9) is provided between the induction coil (4, 11, 85) and at least partial regions of the workpiece (6, 115).

**6.** The device according to Claims 2, 3, 4 and 5, **characterised in that** the susceptor (9) has the shape of a tube which can be turned up over partial regions of the workpiece (6, 115).

**7.** The device according to Claims 1, 2 or 3, **characterised in that** the workpiece (6, 115) has an irregular surface.

**8.** The device according to Claims 1, 2 or 3, **characterised in that** the workpiece is a turbine bade (6, 115) whose low weight blade pan (116) is surrounded by the susceptor (9), whilst the heavy blade foot (117) lies outside the susceptor (9).

**9.** The device according to Claims 1, 2 or 3, **characterised in that** the workpiece is a turbine blade (6, 115) whose blade foot (117) is surrounded by a housing (128), which is part of a support.

**10.** The device according to Claim 8, **characterised in that** the alternating current is adjustable to at least two different frequencies, wherein the first frequency effects maximum inductive heating of the blade foot (117) and the second frequency effects maximum inductive heating of the susceptor (9).

**11.** The device according to Claim 8, **characterised in that** the alternating current is adjustable to at least two different frequencies, wherein the first frequency effects maximum inductive heating of the blade pan (116) and the second frequency effects maximum inductive heating of the susceptor (9).

**12.** The device according to Claims 1, 2 or 3, **characterised in that** the induction coil (11) has regions (52 to 54; 55 to 58) with different winding pitches.

**13.** The device according to Claims 1, 2 or 3, **characterised in that** the induction coil (85) has regions (89 to 94; 95 to 98) with different winding diameters.

**14.** The device according to Claim 13, **characterised in that** several induction coils (100, 101) are provided, each of which lies at its own alternating current source (102, 103).

**15.** The device according to Claims 1, 2 or 3, **characterised in that** a heating chamber (1, 62), in which an induction coil (4) is located, by means of which a workpiece (6, 115) is movable, which workpiece (6, 115) is secured to a support (127, 47, 143).

**16.** The device according to Claim 15, **characterised in that** the support (127, 47, 143) is connected to a rotating jig (73), and can be moved to and from the heating chamber (1, 62).

**17.** The device according to Claim 16, **characterised in that** the rotating jig (73) feeds the support (127, 47, 143) directly, and workpiece (6, 115) via a mechanism (71) into different chambers.

**18.** A method for coating an inductively heatable workpiece, **characterised by** the following steps:

a) Inserting the workpiece in a heating chamber (51);
b) Inductive heating of at least parts of the workpiece;
c) Inserting of the heated workpiece in a coating chamber (38);
d) Coating of at least parts of the workpiece;
e) Inserting the at least partially coated workpiece in a post-treatment chamber (46) where post-heating takes place;
f) Insertion of the post-treated workpiece in a chamber (33) in which rapid cooling of the workpiece takes place.

**19.** The method according to Claim 18, **characterised in that** the workpiece is subjected to cold treatment before being inserted in the heating chamber (51).

**Revendications**

**1.** Dispositif d'échauffement d'une pièce à usiner (6, 115) en une matière pouvant être échauffée par induction, au moins une bobine d'inductance (4, 11, 85) entourant au moins partiellement la pièce à usiner (6, 115) et qui pouvant être branchée sur une source de courant alternatif étant prévue, **caractérisé en ce que** le courant alternatif est réglable à différentes fréquences, à une première fréquence au moins une région prédéfinie de la pièce à usiner (6, 115) étant échauffée par induction, alors qu'à une deuxième fréquence, un objet (par exemple 9) différent de la région prédéfinie étant échauffé par induction, cet objet étant une deuxième région de la même pièce à usiner (6, 115) .

**2.** Dispositif d'échauffement d'une pièce à usiner (6, 115) contenant une matière pouvant être échauffée par induction, au moins une bobine d'inductance (4, 11, 85) entourant au moins partiellement la pièce à usiner (6, 115) et pouvant être branchée sur une source de courant alternatif étant prévue, et entre la pièce à usiner (6, 115) et la bobine d'inductance (4, 11, 85) un suscepteur (9) étant prévu, **caractérisé en ce que** le suscepteur (9) est déplaçable par rapport à la pièce à usiner (6, 115) pour que des parties de cette pièce à usiner (6, 115) soient directement opposées à cette bobine d'inductance (4, 11, 85), alors que d'autres parties sont recouvertes par le suscepteur (9), par rapport à la bobine d'inductance (4, 11, 85).

**3.** Dispositif d'échauffement d'une pièce à usiner (6, 115) en une matière pouvant être échauffée par induction, au moins une bobine d'inductance (4, 11, 85) entourant au moins partiellement la pièce à usiner (6, 115) et pouvant être branchée sur une source de courant alternatif étant prévue, **caractérisé en ce que** le courant alternatif est réglable à différentes fréquences, à une première fréquence au moins une région prédéfinie de la pièce à usiner (6, 115) étant échauffée par induction, alors qu'à une deuxième fréquence, un objet (par exemple 9) différent de la région prédéfinie étant échauffé par induction, cet objet étant un suscepteur.

**4.** Dispositif selon la revendication 3, **caractérisé en ce que** le suscepteur (9) est mobile par rapport à la pièce à usiner (6, 115).

5. Dispositif selon les revendications 3 ou 4, **caractérisé en ce que** le suscepteur (9) est prévu entre les bobines d'inductance (4, 11, 85) et au moins des régions partielles de la pièce à usiner (6, 115).

6. Dispositif selon les revendications 2, 3, 4 ou 5, **caractérisé en ce que** le suscepteur (9) présente la forme d'un tube, que l'on peut retrousser au moins sur des régions partielles de la pièce à usiner (6, 115).

7. Dispositif selon les revendications 1, 2 ou 3, **caractérisé en ce que** la pièce à usiner (6, 115) présente une surface irrégulière.

8. Dispositif selon les revendications 1, 2 ou 3, **caractérisé en ce que** la pièce à usiner est une aube de turbine (6, 115) dont la pale d'aube de faible masse (116) est entourée par le suscepteur, alors que l'emplanture d'aube à forte masse (117) se situe à l'extérieur du suscepteur.

9. Dispositif selon les revendications 1, 2 ou 3, **caractérisé en ce que** la pièce à usiner est une aube de turbine (6, 115) dont l'emplanture d'aube (117) est entourée d'un carter (128) qui est une partie d'une fixation.

10. Dispositif selon la revendication 8, **caractérisé en ce que** le courant alternatif est réglable à au moins deux différentes fréquences, la première fréquence provoquant un échauffement maximal par induction de l'emplanture d'aube (117) et la deuxième fréquence provoquant un échauffement maximal par induction du suscepteur (9).

11. Dispositif selon la revendication 8, **caractérisé en ce que** le courant alternatif est réglable à au moins deux différentes fréquences, la première fréquence provoquant un échauffement maximal par induction de la pale d'aube (116) et la deuxième fréquence provoquant un échauffement maximal par induction du suscepteur (9) .

12. Dispositif selon les revendications 1, 2 ou 3, **caractérisé en ce que** la bobine d'inductance (11) présente des régions (52 à 54 ; 55 à 58) avec différents pas de spire.

13. Dispositif selon les revendications 1, 2 ou 3, **caractérisé en ce que** la bobine d'inductance (85) présente des régions (89 à 94 ; 95 à 98) avec différents diamètres de spire.

14. Dispositif selon la revendication 13, **caractérisé en ce qu'**on a prévu plusieurs bobines d'inductance (100, 101) dont chacune est placée sur sa propre source de courant alternatif (102, 103).

15. Dispositif selon les revendications 1, 2 ou 3, **caractérisé par** une chambre de chauffe (1, 62) dans laquelle se trouve une bobine d'inductance (4), par laquelle une pièce à usiner (6, 115) qui est fixée sur un support (127, 47, 143) est mobile.

16. Dispositif selon la revendication 15, **caractérisé en ce que** le support (127, 47, 143) est relié à un bâti tournant (73) et peut être déplacé vers la chambre de chauffe (1, 62) et éloigné de celle-ci.

17. Dispositif selon la revendication 16, **caractérisé en ce que** le bâti tournant (73) introduit le support (127, 47, 143) directement et la pièce à usiner (6, 115) par l'intermédiaire d'un mécanisme (71) dans différentes chambres.

18. Procédé de revêtement de pièces à usiner pouvant être échauffées par induction, **caractérisé par** les étapes suivantes :

   a) introduction de la pièce à usiner dans une chambre de chauffe (51) ;
   b) échauffement par induction d'au moins des parties de la pièce à usiner ;
   c) introduction de la pièce à usiner échauffée dans une chambre de revêtement (38) ;
   d) revêtement d'au moins des parties de la pièce à usiner ;
   e) introduction de la pièce à usiner au moins partiellement revêtue dans une chambre de retraitement (46), dans laquelle on procède à un réchauffage ;
   f) introduction de la pièce à usiner retraitée dans une chambre (33), dans laquelle on procède à un refroidissement rapide de la pièce à usiner.

19. Procédé selon la revendication 18, **caractérisé en ce que** la pièce à usiner est soumise à un traitement à froid avant l'introduction dans la chambre d'échauffement (51).

**FIG.1**

**FIG.2**

**FIG.3**

**FIG.4**

**FIG.5** (Ansicht „A")

**FIG.6** (Ansicht „B")

**FIG.7**

**FIG.8**

**FIG.9**

FIG.10

**FIG.11**

**FIG.12**

**FIG.13**

**FIG.14**